# EUROPEAN PATENT SPECIFICATION

(11) **EP 4 317 285 B1**
(45) Date of publication and mention of the grant of the patent: **23.04.2025**
(21) Application number: 22779605.9
(22) Date of filing: 16.02.2022
(51) Int. Cl.: C08G 63/664, C08G 63/695, C08L 67/04, C08K 5/52, C08L 101/16

(54) **GLYCOLIC ACID COPOLYMER COMPOSITION AND SOLIDIFICATION/EXTRUSION-MOLDED ARTICLE**
GLYKOLSÄURECOPOLYMERZUSAMMENSETZUNG UND ERSTARRUNGS-/EXTRUSIONSGEFORMTER ARTIKEL
COMPOSITION DE COPOLYMÈRE D'ACIDE GLYCOLIQUE ET ARTICLE MOULÉ PAR SOLIDIFICATION/EXTRUSION

(30) Priority: 30.03.2021 JP 2021058742
(43) Date of publication of application: 07.02.2024
(73) Proprietor: Kureha Corporation, Chuo-ku Tokyo 103-8552 (JP)
(72) Inventor: SHODA, Motoharu, Tokyo 103-8552 (JP); KOBAYASHI, Fuminori, Tokyo 103-8552 (JP); TOSE, Takenori, Tokyo 103-8552 (JP); SUZUKI, Yoshinori, Tokyo 103-8552 (JP)
(74) Representative: Novagraaf Group
(86) International application number: PCT/JP2022/006067
(87) International publication number: WO 2022/209378

(56) References cited:
- WO-A1-2013/162002
- WO-A1-2019/058743
- JP-A- 2004 525 194
- JP-A- 2009 501 559
- US-A1- 2007 014 848
- US-A1- 2015 252 144

## Description

### TECHNICAL FIELD

The present invention relates to a glycolic acid copolymer composition and a solidification- and extrusion-molded article.

### BACKGROUND ART

A polyglycolic acid is a degradable resin material having hydrolyzability and biodegradability while having a high strength. Polyglycolic acid has been used as medical materials such as a bone fixation material and a suture, utilizing its properties. Furthermore, in recent years, polyglycolic acid is used as a member for a downhole tool used for recovery of hydrocarbon resources, and such use is expanded. Depending on the use, further improvement of the degradation rate of polyglycolic acid is demanded.

Various studies have been conducted for degradation rate improvement of polyglycolic acid. For example, Patent Document 1 discloses that a polyglycolic acid resin composition contains carboxylic anhydride as a degradation accelerator. Furthermore, Patent Document 2 discloses that a degradation rate of polyglycolic acid in an alkali aqueous solution is accelerated by mixing with a water-soluble polymer.

### CITATION LIST

### PATENT LITERATURE

Patent Document 1: WO2019/058743
Patent Document 2: JP 2012-149205 A

### SUMMARY OF INVENTION

### TECHNICAL PROBLEM

In degradation of a molded article, reduction in weight may not be correlated to reduction in thickness of the molded article. In a member of a device made of a molded article obtained by solidification extrusion, improvement in rate of reduction in thickness, not improvement in rate of reduction in weight, may be demanded.

An aspect of the present invention was completed in light of the issues described above. An object of the present invention is to provide a glycolic acid copolymer composition that can be solidification- and extrusion-molded and that improves rate of decrease in thickness of the molded article during degradation.

### SOLUTION TO PROBLEM

To solve the issues described above, the glycolic acid copolymer composition according to one aspect of the present invention includes a glycolic acid copolymer and a carboxylic anhydride, in which the glycolic acid copolymer is a copolymer including two or more straight macromolecular chains A each containing a repeating unit derived from glycolic acid and being chemically bonded to a macromolecular chain B that is different from the macromolecular chains A, the macromolecular chain B is derived from a macromolecular compound having a weight average molecular weight of 1500 or greater and 250000 or less and a glass transition temperature of lower than 45°C, and a weight average molecular weight of the glycolic acid copolymer composition is 150000 or greater.

The solidification- and extrusion-molded article according to one aspect of the present invention is a molded article containing the glycolic acid copolymer composition according to one aspect of the present invention.

### ADVANTAGEOUS EFFECTS OF INVENTION

According to one aspect of the present invention, a glycolic acid copolymer composition that can be solidification- and extrusion-molded and that improves rate of decrease in thickness of the molded article during degradation can be provided.

### DESCRIPTION OF EMBODIMENTS

### <1. Glycolic acid copolymer composition>

### (Characteristics of glycolic acid copolymer composition)

The glycolic acid copolymer composition according to one aspect of the present invention contains a glycolic acid copolymer and a carboxylic anhydride, in which the glycolic acid copolymer is a copolymer including two or more straight macromolecular chains A each containing a repeating unit derived from glycolic acid and being chemically bonded to a macromolecular chain B that is different from the macromolecular chains A, the macromolecular chain B is derived from a macromolecular compound having a weight average molecular weight of 1500 or greater and 250000 or less and a glass transition temperature of lower than 45°C, and a weight average molecular weight of the glycolic acid copolymer composition is 150000 or greater.

The glycolic acid copolymer composition of the present aspect contains the particular glycolic acid copolymer and the carboxylic anhydride described above and thus exhibits an effect of improving the rate of decrease in thickness of the molded article during degradation.

Note that "rate of decrease in thickness" is a value calculated based on time variation of "thickness reduction" which is a difference between a thickness of a molded article before beginning of decomposition and a thickness of the molded article at a freely selected time after the beginning of decomposition. The "rate of decrease in thickness" can be measured by the method described in Examples below.

Furthermore, "improving a rate of decrease in thickness of a molded article during degradation" means that a rate of decrease in thickness of a molded article containing the glycolic acid copolymer composition of the present aspect during degradation is higher than that of a molded article containing only a glycolic acid homopolymer.

Furthermore, excellent solidification- and extrusion-moldability can be achieved when the weight average molecular weight (Mw) of the glycolic acid copolymer composition of the present aspect is 150000 or greater. From the perspective of further achieving strength of the molded article according to its use in addition to achieving the excellent solidification- and extrusion-moldability, the weight average molecular weight of the glycolic acid copolymer composition of the present aspect is preferably 160000 or greater, and more preferably 170000 or greater. Furthermore, from the perspective of facilitating molding at the time of solidification- and extrusion-molding or injection molding, the weight average molecular weight of the glycolic acid copolymer composition of the present aspect is preferably 500000 or less, more preferably 450000 or less, and even more preferably 400000.

The weight average molecular weight of the glycolic acid copolymer composition of the present aspect can be measured by the method described below. Approximately 10 mg of the glycolic acid copolymer composition is heated and dissolved in 0.5 mL of DMSO at 150°C and then cooled to room temperature. The cooled solution is diluted to 10 mL with hexafluoroisopropanol (HFIP), and the weight average molecular weight of the composition is measured by using a gel permeation chromatograph (GPC) instrument. As the standard substance, polymethyl methacrylate (PMMA) is used. An example of the GPC instrument is Shodex GPC-104 (detector: RI; column: two HFIP-606M). Furthermore, as a solvent, HFIP containing 5 mM CF₃COONa may be used.

### (Glycolic acid copolymer)

The glycolic acid copolymer is a copolymer including two or more straight macromolecular chains A, each of the straight macromolecular chain A containing a repeating unit derived from glycolic acid (-(-O-CH₂-CO-)-) (hereinafter, referred to as "glycolic acid unit") and being chemically bonded to a macromolecular chain B that is different from the macromolecular chains A. The macromolecular chain A and the macromolecular chain B will be described below.

In the glycolic acid copolymer, two or more macromolecular chains A are only required to be chemically bonded to a macromolecular chain B, and bonding positions of the macromolecular chains A in the macromolecular chain B are not particularly limited. For example, the glycolic acid copolymer may be a triblock copolymer, in which a macromolecular chain A is chemically bonded to each of both terminals of a macromolecular chain B ("ABA-type block copolymer", where A is the macromolecular chain A, and B is the macromolecular chain B), or may be a graft copolymer, in which two or more macromolecular chains A are graft-bonded to a macromolecular chain B.

From the perspective of superior improvement effect for the rate of decrease in thickness during degradation when the glycolic acid copolymer composition is formed into a molded article, the glycolic acid copolymer is preferably an ABA-type block copolymer (where A is the macromolecular chain A, and B is the macromolecular chain B).

Furthermore, in the glycolic acid copolymer, the macromolecular chain A and the macromolecular chain B are preferably bonded by an ester bond. By this, effect of readily improving the rate of decrease in thickness during degradation when the glycolic acid copolymer composition is formed into a molded article is achieved.

**In** particular, in a case where the macromolecular chain B is a unit having a higher hydrophilicity or flexibility than that of the macromolecular chain A, the macromolecular chain A and the macromolecular chain B are particularly preferably bonded by an ester bond. Specifically, in a case where the macromolecular chain B is a unit having a higher hydrophilicity or flexibility than that of the macromolecular chain A, water tends to permeate around the macromolecular chain B rather than around the macromolecular chain A, and the ester bond between the macromolecular chain A and the macromolecular chain B readily hydrolyzes compared to the ester bond in the macromolecular chain A. The molecular weight of the glycolic acid copolymer significantly decreases due to cutting between the macromolecular chain A and the macromolecular chain B in the glycolic acid copolymer due to hydrolysis of the ester bond between the macromolecular chain A and the macromolecular chain B, and thus the rate of decrease in thickness tends to improve.

The macromolecular chain A and the macromolecular chain B constituting the glycolic acid copolymer will be described below.

### (Macromolecular chain A)

The macromolecular chain A is a straight macromolecular chain containing a glycolic acid unit. The number of glycolic acid unit constituting one block of the macromolecular chain A in the glycolic acid copolymer is not particularly limited, and can be appropriately decided in a range that the glycolic acid copolymer can exhibit degradability originated from the macromolecular chain A.

### (Macromolecular chain B)

The macromolecular chain B is a macromolecular chain that is different from the macromolecular chain A and that is derived from a macromolecular compound having a weight average molecular weight of 1500 or greater and 250000 or less and a glass transition temperature (Tg) of lower than 45°C.

The glass transition temperature of the macromolecular compound from which the macromolecular chain B is derived (hereinafter, "macromolecular compound B") is preferably 45°C or lower, and more preferably 0°C or lower, from the perspective of making the glass transition temperature of the glycolic acid copolymer lower than that of a polymer only consisting of the macromolecular chain A. When the glass transition temperature of the macromolecular compound B is lower, flexibility of the resulting glycolic acid copolymer becomes higher. The glass transition temperature of the macromolecular compound from which the macromolecular chain B is derived can be measured by differential scanning calorimetry (DSC) described in Examples.

The weight average molecular weight of the macromolecular compound B is preferably 2500 or greater, more preferably 3000 or greater, even more preferably 7000 or greater, and particularly preferably 7500 or greater, from the perspective of further improving the rate of decrease in thickness of the molded article during degradation. From the perspective of improving strength of the molded article, the weight average molecular weight of the macromolecular compound B is preferably 50000 or less, more preferably 30000 or less, and even more preferably 20000 or less. The weight average molecular weight of the macromolecular compound B being 50000 or less is advantageous from the perspective of solubility in glycolide during glycolic acid copolymer polymerization and from the perspective of controlling copolymerizability. The weight average molecular weight of the macromolecular compound can be measured by the GPC method described in Examples.

The macromolecular compound B having a weight average molecular weight of 1500 or greater and 250000 or less and a glass transition temperature of lower than 45°C is not particularly limited as long as the macromolecular compound B is a macromolecular compound that has functional groups at two or more terminals, the functional groups being capable of chemically bonding with glycolic acid units constituting the macromolecular chain A, that has the particular weight average molecular weight and glass transition temperature described above, and that is of a type different from polyglycolic acid. The macromolecular compound B described above can function as a polymerization initiator.

Examples of the macromolecular compound B described above include a polyol having the particular weight average molecular weight and glass transition temperature described above. Examples of the polyol include polyethylene glycol, polypropylene glycol, polytetramethylene ether glycol, polycaprolactone, polydioxanone, polydimethylsiloxane, and polyethylene oxalate. "Polyol" may be a homopolymer containing only one type of repeating unit, or may be a copolymer further containing a repeating unit derived from another monomer.

From the perspective of imparting hydrophilicity to the glycolic acid copolymer, the macromolecular compound B is preferably a hydrophilic polyhydric alcohol-based polymer having a terminal hydroxy group. Examples of the hydrophilic polyhydric alcohol-based polymer having a terminal hydroxy group include polyethylene glycol, polypropylene glycol, polyglycerin, and polyvinyl alcohol.

In an aspect of the present invention, the macromolecular compound B may be a hydrophilic polyhydric alcohol having a terminal hydroxy group and having a weight average molecular weight of 3000 or greater and 50000 or less. When the macromolecular compound B is a hydrophilic polyhydric alcohol having a terminal hydroxy group and having a weight average molecular weight of 3000 or greater and 50000 or less, hydrophilicity of the macromolecular chain B is exhibited in the glycolic acid copolymer, thus affinity for water during degradation improves, and as a result, an effect of further improving the rate of decrease in thickness of the molded article during degradation is achieved.

In another aspect of the present invention, the macromolecular compound B may be polyethylene glycol or polypropylene glycol having a weight average molecular weight of 3000 or greater and 50000 or less. The polyethylene glycol and polypropylene glycol has a particularly low glass transition temperature and particularly high hydrophilicity. Thus, when the hydrophilic polyhydric alcohol containing a terminal hydroxy group is polyethylene glycol or polypropylene glycol, an effect of imparting flexibility and hydrophilicity to the glycolic acid copolymer is achieved.

In another aspect of the present invention, the macromolecular compound B may be polyethylene glycol having a weight average molecular weight of 7500 or greater and 50000 or less. When the macromolecular compound B is polyethylene glycol having a weight average molecular weight of 7500 or greater and 50000 or less, an effect of further improving the rate of decrease in thickness of the molded article during degradation is achieved.

The macromolecular compound B may be a homopolymer containing a repeating unit derived from one monomer, or may be a copolymer further containing a repeating unit derived from another monomer.

Examples of such other monomers include (i) cyclic monomers such as ethylene oxalate (1,4-dioxane-2,3-dione), lactides, lactones (e.g., β-propiolactone, β-butyrolactone, β-pivalolactone, γ-butyrolactone, δ-valerolactone, β-methyl-δ-valerolactone, and ε-caprolactone), carbonates (e.g., trimethylene carbonate), ethers (e.g., 1,3-dioxane), ether esters (e.g., dioxanone), and amides (e.g., ε-caprolactam); (ii) hydroxycarboxylic acids such as lactic acid, 3-hydroxypropanoic acid, 3-hydroxybutanoic acid, 4-hydroxybutanoic acid, 6-hydroxycaproic acid, and the alkylesters thereof; (iii) mixtures containing substantially equimolar amounts of aliphatic diols, such as ethylene glycol, propylene glycol, tetramethylene ether glycol, and 1,4-butanediol, and aliphatic dicarboxylic acids, such as succinic acid and adipic acid, or the alkyl esters thereof; and two or more types of these.

The repeating unit derived from another monomer can be employed from the perspective of adjusting physical properties of the macromolecular compound B. For example, employing such another repeating unit enables affinity of the macromolecular compound B for water to be adjusted. The content of another repeating unit in the macromolecular compound B can be appropriately decided in the range that the intended effect by the macromolecular chain B is adequately achieved. The content of a repeating unit derived from another monomer in the macromolecular compound B may be 50 mass% or less, and is preferably 30 mass% or less, and even more preferably 10 mass% or less. The macromolecular compound B may be in a straight-chain form, or may be a graft copolymer, in which another macromolecular compound is graft-bonded.

The macromolecular chain B may contain an ester bond in a molecule. When the macromolecular chain B contains an ester bond in a molecule, cutting also occurs in the macromolecular chain B due to hydrolysis of an ester bond, the rate of decrease in thickness tends to further improve.

From the perspectives of allowing the macromolecular chain B to adequately exhibit hydrophilicity in the glycolic acid copolymer and improving the rate of decrease in thickness of the molded article during degradation, the amount of the macromolecular chain B in the glycolic acid copolymer is preferably 0.5 or greater, and more preferably 1.5 or greater, with respect to 100 total of the macromolecular chain A in terms of mass ratio. Furthermore, from the perspective of maintaining strength of the glycolic acid copolymer, the amount of the macromolecular chain B in the glycolic acid copolymer is preferably 30 or less, and more preferably 20 or less, with respect to 100 total of the macromolecular chain A in terms of mass ratio.

The glycolic acid copolymer composition of the present aspect contains the glycolic acid copolymer as a main component. "Containing the glycolic acid copolymer as a main component" means that the content of the glycolic acid copolymer in the glycolic acid copolymer composition of the present aspect is 50 mass% or greater, preferably 60 mass% or greater, more preferably 70 mass% or greater, even more preferably 80 mass% or greater, and yet even more preferably 90 mass% or greater. Furthermore, the glycolic acid copolymer composition of the present aspect contains the predetermined amount of additive such as carboxylic anhydride described below to adjust the physical properties of the glycolic acid copolymer composition. Thus, the content of the glycolic acid copolymer in the glycolic acid copolymer composition is preferably 99 mass% or less, and more preferably 95 mass% or less. The glycolic acid copolymer composition of the present aspect may contain one type of glycolic acid copolymer or two or more types of glycolic acid copolymers.

The glycolic acid copolymer can be produced by a known method. For example, the glycolic acid copolymer can be suitably produced by using the macromolecular compound B, from which the macromolecular chain B is derived, as a polymerization initiator, and subjecting glycolide, which is a dimer of glycolic acid, to ring-opening polymerization in the presence of a small amount of a catalyst and in the substantial absence of a solvent (i.e., under bulk polymerization conditions). The reaction temperature in the ring-opening polymerization can be appropriately decided in a range that can appropriately proceed the ring-opening polymerization of the glycolide and is, for example, 140°C. Examples of such a catalyst include a cationic catalyst such as organic tin carboxylate, tin halide, and antimony halide. As the glycolic acid copolymer, a commercially available product may be used.

### (Carboxylic anhydride)

The glycolic acid copolymer composition of the present aspect includes carboxylic anhydride as a degradation accelerator. The degradation accelerator is an agent (compound) that accelerates degradation of the glycolic acid copolymer composition. The carboxylic anhydride used in the present aspect is not particularly limited and can be appropriately selected in a range that can accelerates the degradation of the glycolic acid copolymer composition. From the perspective of heat resistance that can tolerate the temperature during molding processing of the glycolic acid copolymer composition and from the perspective of miscibility with the glycolic acid copolymer composition, the carboxylic anhydride is preferably a carboxylic anhydride having a ring structure, more preferably hexanoic anhydride, octanoic anhydride, decanoic anhydride, lauric anhydride, myristic anhydride, palmitic anhydride, stearic anhydride, benzoic anhydride, succinic anhydride, maleic anhydride, phthalic anhydride, trimellitic anhydride, tetrahydrophthalic anhydride, butanetetracarboxylic dianhydride, 3,3',4,4'-benzophenone tetracarboxylic dianhydride, diphenylsulfone tetracarboxylic dianhydride, biphenyl tetracarboxylic dianhydride, ethylene glycol bis-anhydro trimellitate, and glycerin bis-anhydro trimellitate monoacetate, and particularly preferably phthalic anhydride, trimellitic anhydride, benzoic anhydride, 3,3',4,4'-benzophenone tetracarboxylic dianhydride, and benzene-1,2,4,5-tetracarboxylic anhydride (pyromellitic anhydride). One type of these carboxylic anhydrides may be used alone, or two or more types of these carboxylic anhydrides may be used in combination.

As described above, because the macromolecular chain B constituting the glycolic acid copolymer is a unit having a higher hydrophilicity or flexibility than that of the macromolecular chain A, water readily permeates the molded article made of the glycolic acid copolymer composition. The permeated water exhibits effects of producing carboxylic acid by acting on the carboxylic anhydride contained in the glycolic acid copolymer composition, and further improving the rate of decrease in thickness during degradation when a molded article is formed.

The content of the carboxylic anhydride in the glycolic acid copolymer composition of the present aspect is preferably 1 mass% or greater, and more preferably 3 mass% or greater, from the perspective of degradability improvement. Furthermore, the content of the carboxylic anhydride in the glycolic acid copolymer composition of the present aspect is preferably 40 mass% or less, more preferably 30 mass% or less, even more preferably 20 mass% or less, and particularly preferably 10 mass% or less, from the perspective of suppressing reduction in strength of the molded article due to bleeding out of the carboxylic anhydride.

### (Other components)

In one aspect of the present invention, the glycolic acid copolymer composition may further contain another component (other component) that is of a type different from the glycolic acid copolymer composition and the carboxylic anhydride described above in a range that the effect of an embodiment of the present invention is achieved. One type or more of such other components may be used, and the amount thereof is only required to be an amount that can exhibit the effect by such other component(s).

Examples of such other components include various additives such as a heat stabilizer, an antioxidant, a light stabilizer, a moisture-proof agent, a waterproof agent, a water-repellent agent, a lubricant, a hydrophilic agent, a water-absorbing agent, a nucleating agent, and a pore-forming agent. In addition, the glycolic acid copolymer composition may contain a polymerization initiator, a catalyst, or the like used in preparation of a polymer.

For example, a thermal stabilizer is added to impart thermal stability for molding, to the glycolic acid copolymer composition. As the thermal stabilizer, a known thermal stabilizer can be suitably used. An example thereof is a phosphorus compound. Examples of the phosphorus compound include a mixture of distearyl acid phosphate and monostearyl acid phosphate ("ADK STAB AX-71", available from Adeka Corporation) used in Examples. As the antioxidant, a known antioxidant can be suitably used. Examples thereof include a hindered phenol compound, a sulfur compound, and a phosphorus compound. Examples of the hindered phenol compound include pentaerythritol tetrakis[3-(3,5-di-tert-butyl-4-hydroxyphenyl)propionate] used in Examples.

### (Method of producing glycolic acid copolymer composition)

The glycolic acid copolymer composition of the present aspect can be prepared by mixing the glycolic acid copolymer, the carboxylic anhydride, and optional other component(s) in predetermined blending amounts.

### (Use)

Because the glycolic acid copolymer composition of the present aspect can provide a molded article with an improved rate of decrease in thickness during degradation, the glycolic acid copolymer composition is suitably used as a raw material of a component for a downhole tool. The component for a downhole tool will be described below. The use of the glycolic acid copolymer composition of the present aspect is not limited to a raw material of a component for a downhole tool and is suitably used as a raw material of various components that require exhibition of degradability of the glycolic acid copolymer.

### <2. Molded article>

The molded article obtained by molding the glycolic acid copolymer composition of the present aspect is also included in the scope of the present invention. Because the glycolic acid copolymer composition of the present aspect can be solidification- and extrusion-molded, the molded article can be suitably produced by solidification- and extrusion-molding. Therefore, the molded article obtained by molding the glycolic acid copolymer composition of the present aspect may be a solidification- and extrusion-molded article. The molding method is not limited to solidification- and extrusion-molding, and the molded article can be produced by a known molding method such as injection molding, melt extrusion molding, compression molding (press molding), and centrifugal molding. A secondary molded article using the molded article as a raw material and a processed article formed by processing the molded article or the secondary molded article are also included in the scope of the present invention.

An example of a case where the molded article is produced by solidification- and extrusion-molding will be described. Pellets made of the glycolic acid copolymer composition are supplied to an extruder with a cylinder set at not lower than the melting point of the composition and 255°C or lower (typically, from 200 to 255°C), and melt-kneaded. Next, the melt-kneaded article is extruded from the extrusion die at the tip of the extruder into the flow path of a forming die, and cooled and solidified to not higher than the crystallization temperature of the glycolic acid copolymer composition in the flow path of the forming die, so that the resultant is extruded to the outside at a speed of 5 to 50 mm/10 minutes from the tip of the forming die. A molded article, which is the solidification- and extrusion-molded article, is produced by pressurizing and pulling the extrudate while applying a back pressure of 1500 to 8500 kg in the forming die direction. The molded body may be annealed by a heat treatment at a temperature of 150°C to 230°C for 3 to 24 hours.

An example of a case where the molded article is produced by injection molding will be described. The pellets made of the glycolic acid copolymer composition are supplied to an injection molding machine equipped with a mold for injection molding. The temperature of the cylinder is set to not lower than the melting point of the glycolic acid copolymer composition and 255°C or lower (typically, from 200 to 255°C), and the mold temperature is set to 0°C or higher and not higher than the melting point of the composition (typically, from 0 to 190°C). Then, the mixture is injection-molded at an injection pressure of 1 to 104 MPa (preferably 10 to 104 MPa) to produce a molded article, which is an injection-molded article. This molded article may be subjected to annealing at a temperature that is not lower than the crystallization temperature of the glycolic acid copolymer composition and not higher than the melting point (typically, from 70 to 220°C) for 1 minute to 10 hours.

The thickness or diameter of the molded article is preferably 1 mm or greater, and more preferably 3 mm or greater, for example, from the perspective of machine processing into a downhole tool member. Furthermore, to obtain a uniform molded article from the perspective of molding processing, the thickness or diameter is preferably 500 mm or less, and more preferably 400 mm or less.

Because the molded article obtained by molding the glycolic acid copolymer composition of the present aspect has excellent rate of decrease in thickness during degradation, the molded article is suitably used as a downhole tool member. The downhole tool is used for underground excavation to recover hydrocarbon resources, such as petroleum and gases, from the ground, and a component thereof is required to have high shape stability. For this reason, the molded article of the present aspect having excellent rate of decrease in thickness during degradation is particularly suited for a downhole tool member. Examples of the downhole tool include a flack plug, a bridge plug, a cement retainer, a perforation gun, a ball sealer, a filler plug, and a packer.

### [Summary]

The glycolic acid copolymer composition according to a first aspect of the present invention contains a glycolic acid copolymer and a carboxylic anhydride, in which the glycolic acid copolymer is a copolymer including two or more straight macromolecular chains A each containing a repeating unit derived from glycolic acid and being chemically bonded to a macromolecular chain B that is different from the macromolecular chains A, the macromolecular chain B is derived from a macromolecular compound having a weight average molecular weight of 1500 or greater and 250000 or less and a glass transition temperature of lower than 45°C, and a weight average molecular weight of the glycolic acid copolymer composition is 150000 or greater.

In the glycolic acid copolymer composition according to a second aspect of the present invention, in the aspect 1 described above, the glycolic acid copolymer is preferably an ABA-type block copolymer (where A is the macromolecular chain A, and B is the macromolecular chain B).

In the glycolic acid copolymer composition according to a third aspect of the present invention, in the first or second aspect described above, the macromolecular chain A and the macromolecular chain B may be bonded by an ester bond.

In the glycolic acid copolymer composition according to a fourth aspect of the present invention, in any one of the first to third aspects described above, a weight average molecular weight of the macromolecular compound is preferably 2500 or greater and 50000 or less, and an amount of the macromolecular chain B in the glycolic acid copolymer is preferably 0.5 or greater and 20 or less with respect to 100 total of the macromolecular chain A in mass ratio.

In the glycolic acid copolymer composition according to a fifth aspect of the present invention, in any one of the first to fourth aspects described above, the macromolecular compound is preferably a hydrophilic polyhydric alcohol-based polymer having a terminal hydroxy group and having a weight average molecular weight of 3000 or greater and 50000 or less.

In the glycolic acid copolymer composition according to a sixth aspect of the present invention, in the fifth aspect described above, the hydrophilic polyhydric alcohol-based polymer having a terminal hydroxy group is preferably polyethylene glycol or polypropylene glycol.

In the glycolic acid copolymer composition according to a seventh aspect of the present invention, in any one of the first to sixth aspects described above, the macromolecular compound is preferably polyethylene glycol having a weight average molecular weight of 7500 or greater and 50000 or less.

In the glycolic acid copolymer composition according to an eighth aspect of the present invention, in any one of the first to seventh aspects described above, a content of the carboxylic anhydride is preferably 1 mass% or greater and 50 mass% or less in the glycolic acid copolymer composition.

A solidification- and extrusion-molded article according to a ninth aspect of the present invention preferably contains the glycolic acid copolymer composition according to any one of the first to eighth aspects described above.

Embodiments of the present invention will be further described in detail using the examples below. Needless to say, the present invention is not limited to the following examples, and details of the present invention can be in various manners. Furthermore, the present invention is not limited to the embodiments described above, and it may be varied in various ways within the scope of the claims. Thus, an embodiment achieved by appropriately combining technical means described herein will be included in the technical scope of the present invention.

### EXAMPLES

### <Weight average molecular weight of glycolic acid copolymer molded article>

Approximately 10 mg of a sample of an injection molded article of the glycolic acid copolymer molded article was heated and dissolved in 0.5 mL of DMSO at 150°C and then cooled to room temperature. The solution was diluted to 10 mL with hexafluoroisopropanol (HFIP) and measured. The measurement conditions are indicated below.
Instrument: Shodex GPC-104 (detector: RI; columns: two HFIP-606M) Solvent: 5 mM CF₃COONa in HFIP

As the standard substance for the molecular weight, polymethyl methacrylate (PMMA) was used, and a weight average molecular weight was calculated.

### <Content of macromolecular chain B in glycolic acid copolymer>

In approximately 100 mg of pellets of the glycolic acid copolymer composition, 190 mg of a mixed solvent of hexafluoroacetone and deuterochloroform (CDCl₃) (mixing ratio 9:1) was added and heated and dissolved at 40°C for approximately 10 minutes. After the mixture was cooled to room temperature, the mixture was filtered, and NMR measurement for the filtrate was performed. The NMR measurement conditions are as follows.
Instrument: JNM-ECZ600R, available from JEOL Ltd.
Solvent: CDCl₃

### <Measurement of glass transition temperature of glycolic acid copolymer molded article>

Approximately 10 mg of a sample of an injection molded article of the glycolic acid copolymer molded article was placed in a pan for measurement and was subjected to differential scanning calorimetry (DSC). The measurement conditions are indicated below.
Instrument: Mettler Toledo DSC³⁺
Column temperature: Retention at -150°C for 5 minutes → (20°C/min) → retention at 250°C for 3 minutes
Gas: N₂

### <Measurement of rate of decrease in thickness>

The required number of 13 mm cubic test pieces were prepared from an injection molded article of the glycolic acid copolymer composition. Next, the test piece was placed in a 1 L autoclave at a temperature of 49°C, and an immersion test was performed by filling the autoclave with water (deionized water). The test piece was retrieved after immersion at predetermined time intervals, and the cross-sectional surface was cut and exposed. After the test piece was left to stand overnight in a dry room and dried, the thickness of the core part (hard portion) of the test piece was measured. The reduced thickness was measured from the difference between the thickness before immersion (initial thickness, specifically 13 mm) and after immersion. The time variation in the decrease in thickness of the test piece was determined based on the measurements of the decrease in thickness of the test piece taken at different immersion times. Then, the rate of decrease in thickness (unit: mm/h) of the test piece having a thickness of 13 mm was calculated from the time variation for the decrease in thickness of the test piece in a range where the decrease in thickness of the test piece had linear variation over time.

### [Example 1: Preparation of PGA-PEG (7.5k)]

With respect to 100 parts by mass of glycolide, 0.003 parts by mass of tin dichloride as a catalyst, 2 parts by mass of polyethylene glycol (Mw: 7500) (macromolecular compound B) as a polymerization initiator, and 1 part by mass of pentaerythritol tetrakis[3-(3',5'-di-t-butyl-4'-hydroxyphenyl)propionate] (Irganox 1010) as a thermal stabilizer were charged in a polymerization vessel. The charged contents were retained under a heated condition at 140°C, the polymerization reaction was allowed to proceed, and thus a polymer was obtained. The glass transition temperature of the polyethylene glycol (Mw: 7500) was -67°C.

In the polymer, pyromellitic dianhydride as a degradation accelerator and a mixture of distearyl acid phosphate and monostearyl acid phosphate ("ADK STAB AX-71", available from Adeka Corporation) as a thermal stabilizer were blended. The obtained compound was supplied to a feed part of a twinscrew extrusion kneader ("2D25S", available from Toyo Seiki Seisaku-sho, Ltd.) with a screw temperature set at 190 to 240°C and melt-kneaded, and thus pellets of the glycolic acid copolymer composition were obtained.

The pellets of the glycolic acid copolymer composition were supplied to a feed part of an injection molding machine ("EC-100N", available from Toshiba Machine Co., Ltd.) with a cylinder temperature set at 190 to 240°C and injection-molded, and thus an injection molded article was obtained. The mold temperature for the injection molded article was set to 100°C. The contents of the additives and the physical properties of the obtained injection molded article are indicated in Table 1.

### [Example 2: Preparation of PGA-PEG (20k)]

It was prepared under the same conditions as in Example 1 except for using polyethylene glycol (Mw: 20000) in place of the polyethylene glycol (Mw: 7500) as the polymerization initiator. The glass transition temperature of the polyethylene glycol (Mw: 20000) was -67°C. The contents of the additives and the physical properties of the obtained injection molded article are indicated in Table 1.

### [Example 3: Preparation of PGA-PEG (20k)]

It was prepared under the same conditions as in Example 2 except for using 3 parts by mass of the polyethylene glycol (Mw: 20000). The contents of the additives and the physical properties of the obtained injection molded article are indicated in Table 1.

### [Example 4: Preparation of PGA-PEG (20k)]

It was prepared under the same conditions as in Example 2 except for using 4 parts by mass of the polyethylene glycol (Mw: 20000). The contents of the additives and the physical properties of the obtained injection molded article are indicated in Table 1.

### [Example 5: Preparation of PGA-PEG (20k)]

It was prepared under the same conditions as in Example 2 except for increasing the amount of the degradation accelerator. The contents of the additives and the physical properties of the obtained injection molded article are indicated in Table 1.

### [Example 6: Preparation of PGA-PEG (40k)]

It was prepared under the same conditions as in Example 1 except for using polyethylene glycol (Mw: 40000) in place of the polyethylene glycol (Mw: 7500) as the polymerization initiator. The glass transition temperature of the polyethylene glycol (Mw: 40000) was -67°C. The contents of the additives and the physical properties of the obtained injection molded article are indicated in Table 1.

### [Example 7: Preparation of PGA-PEG (40k)]

It was prepared under the same conditions as in Example 6 except for using 10 parts by mass of the polyethylene glycol (Mw: 40000). The contents of the additives and the physical properties of the obtained injection molded article are indicated in Table 1.

### [Example 8: Preparation of PGA-PPG]

It was prepared under the same conditions as in Example 1 except for using polypropylene glycol (PPG; Mw: 3000) in place of the polyethylene glycol (Mw: 7500) as the polymerization initiator. The glass transition temperature of the polypropylene glycol (Mw: 3000) was -40°C. The contents of the additives and the physical properties of the obtained injection molded article are indicated in Table 1.

### [Example 9: Preparation of PGA-PTMG]

It was prepared under the same conditions as in Example 1 except for using polytetramethylene ether glycol (PTMG; Mw: 3000) in place of the polyethylene glycol (Mw: 7500) as the polymerization initiator. The glass transition temperature of the polytetramethylene ether glycol (Mw: 3000) was -76°C. The contents of the additives and the physical properties of the obtained injection molded article are indicated in Table 1.

### [Example 10: Preparation of PGA-PCL (4k)]

It was prepared under the same conditions as in Example 1 except for using polycaprolactone (PCL; Mw: 4000) in place of the polyethylene glycol (Mw: 7500) as the polymerization initiator. The glass transition temperature of the polycaprolactone (Mw: 4000) was -80°C. The contents of the additives and the physical properties of the obtained injection molded article are indicated in Table 1.

### [Example 11: Preparation of PGA-PCL (10k)]

It was prepared under the same conditions as in Example 1 except for using 4 parts by mass of polycaprolactone (PCL; Mw: 10000) in place of the polyethylene glycol (Mw: 7500) as the polymerization initiator. The glass transition temperature of the polycaprolactone (Mw: 10000) was -80°C. The contents of the additives and the physical properties of the obtained injection molded article are indicated in Table 1.

### [Example 12: Preparation of PGA-PDO]

It was prepared under the same conditions as in Example 1 except for using polydioxanone (PDO; Mw: unknown) in place of the polyethylene glycol (Mw: 7500) as the polymerization initiator. The glass transition temperature of the polydioxanone was -10°C. The contents of the additives and the physical properties of the obtained injection molded article are indicated in Table 1.

### [Example 13: Preparation of PGA-PDMS]

It was prepared under the same conditions as in Example 1 except for using polydimethylsiloxane (PDMS; Mw: 2500) in place of the polyethylene glycol (Mw: 7500) as the polymerization initiator. The glass transition temperature of the polydimethylsiloxane (Mw: 2500) was -120°C. The contents of the additives and the physical properties of the obtained injection molded article are indicated in Table 1.

### [Example 14: Preparation of PGA-(PEG-g-PDMS)]

It was prepared under the same conditions as in Example 1 except for using polyethylene glycol-grafted polydimethylsiloxane (PEG-g-PDMS; Mw: 6500) in place of the polyethylene glycol (Mw: 7500) as the polymerization initiator. The glass transition temperature of the polyethylene glycol-grafted polydimethylsiloxane (Mw: 6500) was -120°C. The contents of the additives and the physical properties of the obtained injection molded article are indicated in Table 1.

### [Comparative Example 1: Preparation of PGA]

An injection molded article was obtained by the same conditions as in Example 1 except for using a polymer obtained by retaining charged contents containing 0.3 parts by mass of 1-dodecanol in place of the polyethylene glycol (Mw: 7500) as the polymerization initiator and containing no pentaerythritol tetrakis[3-(3',5'-di-t-butyl-4'-hydroxyphenyl)propionate] (Irganox 1010) under heated condition at 170°C. The contents of the additives and the physical properties of the obtained injection molded article are indicated in Table 1. Note that, because the 1-dodecanol is not a polymer and does not form a repeating unit, the requirements as the macromolecular chain B were not satisfied.

### [Comparative Example 2: Preparation of PGA-PEG (20k) containing no pyromellitic dianhydride]

It was prepared under the same conditions as in Example 2 except for blending no degradation accelerator. The contents of the additives and the physical properties of the obtained injection molded article are indicated in Table 1.

### [Comparative Example 3: Preparation of blend PGA-PEG (20k)]

It was prepared under the same conditions as in Example 1 except for using a mixture obtained by mixing the polymer of Comparative Example 1 and polyethylene glycol (Mw: 20000) in a mass ratio of 80:20 as the polymer. The contents of the additives and the physical properties of the obtained injection molded article are indicated in Table 1.

### [Comparative Example 4: Preparation of PGA-PEG (1k)]

It was prepared under the same conditions as in Example 1 except for using polyethylene glycol (Mw: 1000) in place of the polyethylene glycol (Mw: 7500) as the polymerization initiator. The glass transition temperature of the polyethylene glycol (Mw: 1000) was -67°C. The contents of the additives and the physical properties of the obtained injection molded article are indicated in Table 1.

### [Comparative Example 5: Preparation of PGA-PEG (275k)]

It was prepared under the same conditions as in Example 1 except for using polyethylene glycol (Mw: 275000) in place of the polyethylene glycol (Mw: 7500) as the polymerization initiator. However, a polymer was not obtained in Comparative Example 5. The glass transition temperature of the polyethylene glycol (Mw: 275000) was -67°C.

### [Comparative Example 6: Preparation of PGA-(MePEG)]

It was prepared under the same conditions as in Example 1 except for using methoxy polyethylene glycol (MePEG; Mw: 4000) in place of the polyethylene glycol (Mw: 7500) as the polymerization initiator. The glass transition temperature of the methoxy polyethylene glycol (Mw: 4000) was -67°C. In Comparative Example 6, an AB-type block copolymer was prepared. The contents of the additives and the physical properties of the obtained injection molded article are indicated in Table 1.

**[Table 1]**

| [Table 1-1] | | | | |
|---|---|---|---|---|
| | Polymer | Physical properties of macromolecular chain B | | |
| | | Weight average molecular weight | Mass ratio with respect to 100 total of macromolecular chain A | Number of terminals [eq/mol] |
| Example 1 | PGA-PEG (7.5k) | 7500 | 1.8 | 2 |
| Example 2 | PGA-PEG (20k) | 20000 | 1.8 | 2 |
| Example 3 | PGA-PEG (20k) | 20000 | 2.7 | 2 |
| Example 4 | PGA-PEG (20k) | 20000 | 3.6 | 2 |
| Example 5 | PGA-PEG (20k) | 20000 | 1.8 | 2 |
| Example 6 | PGA-PEG (40k) | 40000 | 1.8 | 2 |
| Example 7 | PGA-PEG (40k) | 40000 | 9 | 2 |
| Example 8 | PGA-PPG | 3000 | 1.8 | 2 |
| Example 9 | PGA-PTMG | 3000 | 1.8 | 2 |
| Example 10 | PGA-PCL (4k) | 4000 | 1.8 | 2 |
| Example 11 | PGA-PCL (10k) | 10000 | 3.6 | 2 |
| Example 12 | PGA-PDO | Unknown | 1.8 | 2 |
| Example 13 | PGA-PDMS | 2500 | 1.8 | 2 |
| Example 14 | PGA-(PEG-g-PDMS) | 6500 | 1.8 | >2 |
| Comparative Example 1 | PGA | - | - | - |
| Comparative Example 2 | PGA-PEG (20k) | 20000 | 1.8 | 2 |
| Comparative Example 3 | Blend PGA/PEG (20k) | - | - | - |
| Comparative Example 4 | PGA-PEG (1k) | 1000 | 1.8 | 2 |
| Comparative Example 5 | PGA-PEG (275k) | 275000 | - | 2 |
| Comparative Example 6 | PGA-(MePEG) | 4000 | 1.8 | 1 |

**[Table 1-2]**

| | Injection molded article | | | | |
|---|---|---|---|---|---|
| | Additive content | | Tg [°C] | Mw [g/mol] | Rate of decrease in thickness [mm/h] |
| | Degradation accelerator [wt%] | Thermal stabilizer [wt%] | | | |
| Example 1 | 7 | 1.12 | 38 | 215000 | 0.20 |
| Example 2 | 7 | 1.12 | 32 | 287000 | 0.20 |
| Example 3 | 7 | 1.12 | 30 | 290000 | 0.20 |
| Example 4 | 7 | 1.12 | 32 | 267000 | 0.18 |
| Example 5 | 10 | 1.12 | 33 | 287000 | 0.19 |
| Example 6 | 7 | 1.12 | 34 | 260785 | 0.18 |
| Example 7 | 7 | 1.12 | 34 | 330000 | 0.18 |
| Example 8 | 7 | 1.12 | 32 | 182000 | 0.21 |
| Example 9 | 7 | 1.12 | 37 | 210000 | 0.11 |
| Example 10 | 7 | 1.12 | 38 | 270000 | 0.07 |
| Example 11 | 7 | 1.12 | 38 | 240000 | 0.10 |
| Example 12 | 7 | 1.12 | 40 | 200000 | 0.10 |
| Example 13 | 7 | 1.12 | 37 | 200000 | 0.10 |
| Example 14 | 7 | 1.12 | 34 | 175500 | 0.08 |
| Comparative Example 1 | 7 | 1.12 | 44 | 220000 | 0.04 |
| Comparative Example 2 | 0 | 1.12 | 32 | 260000 | 0.05 |
| Comparative Example 3 | 7 | 1.12 | 43 | 220000 | 0.03 |
| Comparative Example 4 | 7 | 1.12 | 39 | 144600 | 0.06 |
| Comparative Example 5 | - | - | - | - | Not polymerizable |
| Comparative Example 6 | 0 | 1.12 | 39 | 239000 | 0.02 |

**[Table 1-3]**

| | Injection molded article |
|---|---|
| | Solidification- and extrusion-moldability |
| Example 1 | Present |
| Example 2 | Present |
| Example 3 | Present |
| Example 4 | Present |
| Example 5 | Present |
| Example 6 | Present |
| Example 7 | Present |
| Example 8 | Present |
| Example 9 | Present |
| Example 10 | Present |
| Example 11 | Present |
| Example 12 | Present |
| Example 13 | Present |
| Example 14 | Present |
| Comparative Example 1 | Present |
| Comparative Example 2 | Present |
| Comparative Example 3 | Present |
| Comparative Example 4 | Not present |
| Comparative Example 5 | Not present |
| Comparative Example 6 | Present |

Note that the "thermal stabilizer" in Table 1 indicates an amount of "ADK STAB AX-71" added at the time of injection molding. Furthermore, "solidification- and extrusion-moldability" in Table 1 indicates a result of evaluation based on whether the weight average molecular weight of the glycolic acid copolymer molded article was 150000 or greater or not.

As is clear from the comparison between Example 1 and Comparative Example 1, the rate of decrease in thickness of the molded article during degradation was improved when, in the glycolic acid copolymer composition containing the glycolic acid copolymer and the carboxylic anhydride, the glycolic acid copolymer was a copolymer including two or more straight macromolecular chains A each containing a repeating unit derived from glycolic acid and being chemically bonded to a macromolecular chain B that was different from the macromolecular chains A, and the macromolecular chain B was derived from a macromolecular compound having a weight average molecular weight of 1500 or greater and 250000 or less and a glass transition temperature of lower than 45°C, compared to the case of the glycolic acid homopolymer of Comparative Example 1.

Furthermore, as is clear from the comparison between Example 1 and Comparative Example 4, when the weight average molecular weight of the glycolic acid copolymer was 150000 or greater, a glycolic acid copolymer composition with which solidification- and extrusion-molding was possible was provided.

Furthermore, as is clear from the comparison between Example 1 and Comparative Example 6, when the glycolic acid copolymer was an ABA-type block copolymer (where A was a macromolecular chain A, and B was a macromolecular chain B) or a graft copolymer including two or more macromolecular chains A being chemically bonded to a macromolecular chain B, an effect of improving the rate of decrease in thickness of the molded article during degradation was achieved.

Furthermore, as is clear from the comparison of Example 14 and Examples 1 to 7, the glycolic acid copolymer composition, in which the weight average molecular weight of the macromolecular chain B was 7500 or greater and 50000 or less and in which the block copolymer derived from a polyethylene glycol was contained, exhibited a particularly superior rate of decrease in thickness of the molded article during degradation.

Furthermore, similarly to Examples of Patent Document 2 (JP 2012-149205 A), in Comparative Example 3, in which PGA was mixed with polyethylene glycol, the rate of decrease in thickness did not improve. From this, it was shown that the improvement in rate of decrease in weight caused by leaching of the polyethylene glycol into water of Patent Document 2 is different from the improvement in rate of decrease in weight along with improvement in rate of decrease in thickness of the molded article according to an embodiment of the present invention.

### INDUSTRIAL APPLICABILITY

The molded article according to an embodiment of the present invention has an excellent degradation rate of thickness and can be used for, for example, a downhole tool for well drilling.

## Claims

1. A glycolic acid copolymer composition comprising a glycolic acid copolymer and a carboxylic anhydride, wherein the glycolic acid copolymer is a copolymer comprising two or more straight macromolecular chains A each containing a repeating unit derived from glycolic acid and being chemically bonded to a macromolecular chain B that is different from the macromolecular chains A,
the macromolecular chain B is derived from a macromolecular compound having a weight average molecular weight of 1500 or greater and 250000 or less and a glass transition temperature of lower than 45°C, and
a weight average molecular weight of the glycolic acid copolymer composition is 150000 or greater, measured as indicated in the description.

2. The glycolic acid copolymer composition according to claim 1, wherein the glycolic acid copolymer is an ABA-type block copolymer (where A is the macromolecular chain A, and B is the macromolecular chain B).

3. The glycolic acid copolymer composition according to claims 1 or 2, wherein the macromolecular chain A and the macromolecular chain B are bonded by an ester bond.

4. The glycolic acid copolymer composition according to any one of claims 1 to 3, wherein
a weight average molecular weight of the macromolecular compound is 2500 or greater and 50000 or less, and
an amount of the macromolecular chain B in the glycolic acid copolymer is 0.5 or greater and 20 or less with respect to 100 total of the macromolecular chain A in mass ratio.

5. The glycolic acid copolymer composition according to any one of claims 1 to 4, wherein the macromolecular compound is a hydrophilic polyhydric alcohol-based polymer having a terminal hydroxy group and having a weight average molecular weight of 3000 or greater and 50000 or less.

6. The glycolic acid copolymer composition according to claim 5, wherein the hydrophilic polyhydric alcohol-based polymer having a terminal hydroxy group is polyethylene glycol or polypropylene glycol.

7. The glycolic acid copolymer composition according to any one of claims 1 to 6, wherein the macromolecular compound is a polyethylene glycol having a weight average molecular weight of 7500 or greater and 50000 or less.

8. The glycolic acid copolymer composition according to any one of claims 1 to 7, wherein a content of the carboxylic anhydride is 1 mass% or greater and 50 mass% or less in the glycolic acid copolymer composition.

9. A solidification- and extrusion-molded article comprising the glycolic acid copolymer composition according to any one of claims 1 to 8.

## Patentansprüche

1. Glykolsäurecopolymer-Zusammensetzung, umfassend ein Glykolsäurecopolymer und ein Carbonsäureanhydrid, wobei das Glykolsäurecopolymer ein Copolymer ist, das zwei oder mehr gerade makromolekulare Ketten A umfasst, die jeweils eine sich wiederholende Einheit enthalten, die von Glykolsäure abgeleitet ist, und an eine makromolekulare Kette B chemisch gebunden ist, die sich von den makromolekularen Ketten A unterscheidet,
die makromolekulare Kette B von einer makromolekularen Verbindung abgeleitet ist, die ein gewichtsmittleres Molekulargewicht von 1500 oder mehr und 250000 oder weniger und einer Glasübergangstemperatur von weniger als 45 °C aufweist, und
wobei ein gewichtsdurchschnittliches Molekulargewicht der Glykolsäurecopolymer-Zusammensetzung 150000 oder größer ist, gemessen wie in der Beschreibung angegeben.

2. Glykolsäurecopolymer-Zusammensetzung nach Anspruch 1, wobei das Glykolsäurecopolymer ein ABA-Typ-Blockcopolymer ist (wobei A die makromolekulare Kette A und B die makromolekulare Kette B ist).

3. Glykolsäurecopolymer-Zusammensetzung nach den Ansprüchen 1 oder 2, wobei die makromolekulare Kette A und die makromolekulare Kette B durch eine Esterbindung gebunden sind.

4. Glykolsäurecopolymer-Zusammensetzung nach einem der Ansprüche 1 bis 3, wobei
ein gewichtsdurchschnittliches Molekulargewicht der makromolekularen Verbindung 2500 oder größer und 50000 oder weniger ist, und
eine Menge der makromolekularen Kette B in dem Glykolsäurecopolymer 0,5 oder größer und 20 oder weniger ist, bezogen auf 100 Gesamtmenge der makromolekularen Kette A im Massenverhältnis.

5. Glykolsäurecopolymer-Zusammensetzung nach einem der Ansprüche 1 bis 4, wobei die makromolekulare Verbindung ein hydrophiles Polymer auf Basis von mehrwertigem Alkohol, das eine terminale Hydroxygruppe aufweist, und ein gewichtsdurchschnittliches Molekulargewicht von 3000 oder größer und 50000 oder weniger aufweist, ist.

6. Glykolsäurecopolymer-Zusammensetzung nach Anspruch 5, wobei das hydrophile Polymer auf Basis von mehrwertigem Alkohol, das eine terminale Hydroxygruppe aufweist, Polyethylenglykol oder Polypropylenglykol ist.

7. Glykolsäurecopolymer-Zusammensetzung nach einem der Ansprüche 1 bis 6, wobei die makromolekulare Verbindung ein Polyethylenglykol, das ein gewichtsdurchschnittliches Molekulargewicht von 7500 oder größer und 50000 oder weniger aufweist, ist.

8. Glykolsäurecopolymer-Zusammensetzung nach einem der Ansprüche 1 bis 7, wobei der Gehalt des Carbonsäureanhydrids 1 Massen-% oder größer und 50 Massen-% oder weniger in der Glykolsäure-Copolymer-Zusammensetzung ist.

9. Gegenstand, der durch Verfestigung und Extrusion geformt ist, umfassend die Glykolsäurecopolymer-Zusammensetzung nach einem der Ansprüche 1 bis 8.

## Revendications

1. Composition de copolymère d'acide glycolique comprenant un copolymère d'acide glycolique et un anhydride carboxylique, dans laquelle le copolymère d'acide glycolique est un copolymère comprenant deux chaînes macromoléculaires A linéaires ou plus contenant chacune un motif de répétition dérivé d'acide glycolique et étant liées chimiquement à une chaîne macromoléculaire B qui est différente des chaînes macromoléculaires A,
la chaîne macromoléculaire B est dérivée d'un composé macromoléculaire ayant une masse moléculaire moyenne en poids de 1500 ou plus et de 250 000 ou moins et une température de transition vitreuse inférieure à 45 °C, et
une masse moléculaire moyenne en poids de la composition de copolymère d'acide glycolique est de 150 000 ou plus, mesurée de la façon indiquée dans la description.

2. Composition de copolymère d'acide glycolique selon la revendication 1, dans laquelle le copolymère d'acide glycolique est un copolymère séquencé de type ABA (où A est la chaîne macromoléculaire A, et B est la chaîne macromoléculaire B).

3. Composition de copolymère d'acide glycolique selon les revendications 1 ou 2, dans laquelle la chaîne macromoléculaire A et la chaîne macromoléculaire B sont liées par une liaison ester.

4. Composition de copolymère d'acide glycolique selon l'une quelconque des revendications 1 à 3, dans laquelle
une masse moléculaire moyenne en poids du composé macromoléculaire est de 2500 ou plus et de 50 000 ou moins, et
une quantité de la chaîne macromoléculaire B dans le copolymère d'acide glycolique est de 0,5 ou plus et de 20 ou moins par rapport à un total de 100 de la chaîne macromoléculaire A en rapport de masse.

5. Composition de copolymère d'acide glycolique selon l'une quelconque des revendications 1 à 4, dans laquelle le composé macromoléculaire est un polymère à base d'alcool polyhydrique hydrophile ayant un groupe hydroxy terminal et ayant une masse moléculaire moyenne en poids de 3000 ou plus et de 50 000 ou moins.

6. Composition de copolymère d'acide glycolique selon la revendication 5, dans laquelle le polymère à base d'alcool polyhydrique hydrophile ayant un groupe hydroxy terminal est du polyéthylène glycol ou du polypropylène glycol.

7. Composition de copolymère d'acide glycolique selon l'une quelconque des revendications 1 à 6, dans laquelle le composé macromoléculaire est un polyéthylène glycol ayant une masse moléculaire moyenne en poids de 7500 ou plus et de 50 000 ou moins.

8. Composition de copolymère d'acide glycolique selon l'une quelconque des revendications 1 à 7, dans laquelle une teneur en anhydride carboxylique est de 1 % en masse ou plus et de 50 % en masse ou moins dans la composition de copolymère d'acide glycolique.

9. Article moulé par solidification et extrusion comprenant la composition de copolymère d'acide glycolique selon l'une quelconque des revendications 1 à 8.
